# EUROPEAN PATENT SPECIFICATION

(11) **EP 1 318 459 B1**
(45) Date of publication and mention of the grant of the patent: **11.04.2012**
(21) Application number: 00957122.5
(22) Date of filing: 12.09.2000
(51) Int. Cl.: G06F 21/20

(54) **DEVICE OPERATION PERMITTING/AUTHENTICATING SYSTEM**
VORRICHTUNGSANWENDUNGS-ERLAUBENDES/BEGLAUBENDES SYSTEM
SYSTEME D'AUTORISATION/AUTHENTIFICATION DE FONCTIONNEMENT D'UN DISPOSITIF

(43) Date of publication of application: 11.06.2003
(73) Proprietor: MITSUBISHI DENKI KABUSHIKI KAISHA, Chiyoda-ku Tokyo 100-8310 (JP)
(72) Inventor: TANAKA, Kazuhiro, c/o Mitsubishi Denki K.K., Tokyo 100-831 (JP); OIKAWA, Yasuyuki, c/o Mitsubishi Denki K.K., Tokyo 100-831 (JP)
(74) Representative: HOFFMANN EITLE
(86) International application number: PCT/JP2000/006229
(87) International publication number: WO 2002/023359

(56) References cited:
- EP-A2- 0 923 018
- JP-A- 9 134 428
- JP-A- 9 297 735
- JP-A- 59 128 637
- US-A- 5 229 764
- US-A- 5 719 950
- US-A- 6 111 517
- "METHOD OF AND APPARATUS FOR CONVENIENTLY RESETTING ELECTRONIC LOCK OF COMPUTER SYSTEM" IBM TECHNICAL DISCLOSURE BULLETIN, IBM CORP. NEW YORK, US, vol. 36, no. 8, 1 August 1993 (1993-08-01) , pages 83-84, XP000390149 ISSN: 0018-8689

## Description

### TECHNICAL FIELD

The present invention relates to a device operation permission/authentication system that permits and authenticates operation of a device on the basis of biometric information of an operator, thereby limiting operators of the device to specific persons.

### BACKGROUND ART

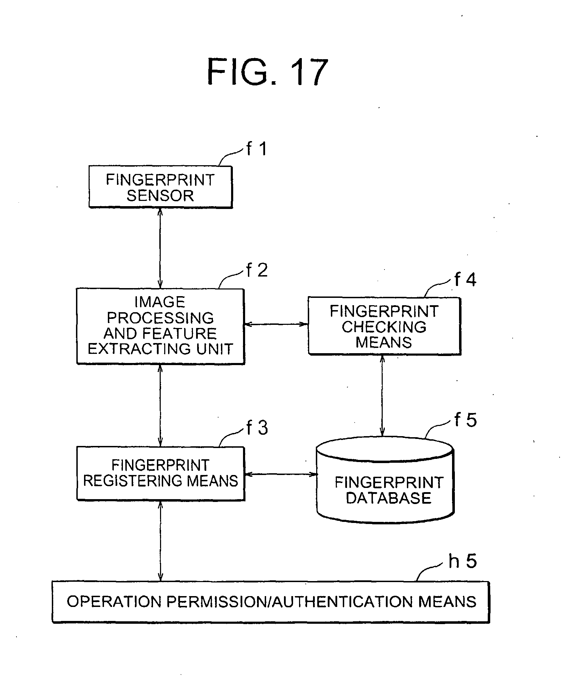

FIG. 17 is a functional block diagram showing a conventional device operation permission/authentication system that is based on a fingerprint checking technique.

In FIG. 17, reference numeral f1 denotes a fingerprint sensor for reading a fingerprint image, numeral f2 an image processing and feature extracting unit for extracting features by performing image processing on the fingerprint image from the fingerprint sensor f1, numeral f4 a fingerprint registering means for registering fingerprint data showing the features extracted by the image processing and feature extracting unit f2, numeral f5 a fingerprint database for managing the fingerprint data registered by the fingerprint registering means f4, numeral f3 a fingerprint checking means for performing a checking operation by comparing fingerprint data managed by the fingerprint database f5 with fingerprint data sent for the checking operation from the image processing and feature extracting unit f2, and numeral h5 an operation permission/authentication means for permitting and authenticating start of operation of a device on the basis of a result of the checking operation by the fingerprint checking means f3.

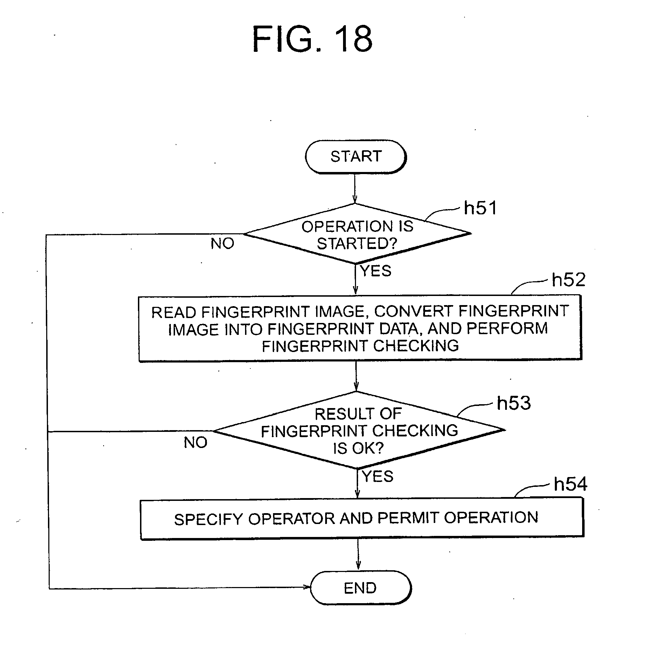

Next, an operation according to the foregoing construction will be described with reference to the flowchart shown in FIG. 18.

First, if an operator tries to start operation of a device (step h51), the fingerprint sensor f1 reads a fingerprint image, the image processing and feature extracting unit f2 converts the fingerprint image into fingerprint data, and the fingerprint checking means f3 performs fingerprint checking by comparing the fingerprint data with fingerprint data in the fingerprint database f5 (step h52). Then, if a result of the fingerprint checking is OK, the operation permissionlauthentication means h5 verifies the operator and permits him/her to start the operation of the device (steps h53 and h54).

In such a conventional device operation permission/authentication system that is based on the fingerprint checking technique, after an operator is identified and it is permitted to start operation of a device in step h54 in the manner described above, the device is placed in a state where it is possible for anyone to operate the device. This causes a problem concerning security. Also, to avoid this problem, steps h51 to h54 may be repeated to permit and authenticate continuation of the operation of the device. In this case, however, to continue the operation of the device, the operator is required to affix his/her finger each time fingerprint checking is repeated. This means that there occurs a problem concerning convenience.

US 6 111 517 describes continuous video monitoring using face recognition for access control. Here, a continuous monitoring system for regulating access to a computer system is described that employs real-time face recognition to initially detect the presence of an authorized individual and to continuously track the continued presence of the individual. In detail, in a not-tracking mode, a facial representation is acquired and compared to stored facial representations. Once a match is obtained, the system enters the tracking mode and continuously tracks the individual and compares newly acquired facial representation to stored facial representation. Speech recognition software can be employed to detect and identify a name spoken by the individual so that only facial representations of all individuals with this name are used for a comparison.

US 5 229 764 relates to a continuous biometric authentication matrix. A system activating and analyzing biometric data from a plurality of biometrically-oriented personal identification devices at intermittent intervals selectively allows or prevents continued use of a particular protected system by a particular individual. A matrix can employ a variety of biometric personal identification devices, such as thumbscan, digital photo, voiceprints, fingerprints, etc. Depending upon the application, different biometric authentication devices can be used at different frequencies.

The article of the IBM Technical Disclosure Bulletin, XP 000390149 (ISSN 0018-8689), describes a method of AND apparatus for conveniently resetting electronic lock of computer system. A methodology is described for presenting a user with a warning signal, prior to locking a computer system, which would allow the computer user to present a unique phrase (voice) or keyboard or mouse interrupt for interrupting a computer lock procedure. The warning signal lead time and form is configurable.

EP 0 923 018 A2 relates to a personal authentication system. The authentication system includes a computer, an input means, a fingerprint database, a display device, an adapter circuit and a fingerprint collating device. The authentication system allows a user to perform an operation only when fingerprint information of the user is coincident with fingerprint information registered in a database.

### DISCLOSURE OF THE INVENTION

The present invention has been made in the light of the problems described above, and the object of the present invention is to provide a device operation permission/authentication system with which it is possible to continue operation of a device without repeating a cumbersome operation like a fingerprint checking operation performed to start the operation, thereby maintaining convenience and also enhancing a security level.

This is achieved by the independent claims. Advantageous embodiments are described in the dependent claims.

A device operation permission/authentication system according to an aspect comprises: an operation start authentication means for, prior to operation of a device, reading first biometric information of an operator, checking the first biometric information against prestored information, and permitting and authenticating start of the operation on the basis of a result of the checking operation; and operation continuation authentication means for, during the operation of the device, reading second biometric information that is different from the first biometric information of the operator in a non-contact manner, checking the second biometric information against prestored information, and permitting and authenticating continuation of the operation on the basis of a result of the checking operation.

Also, each of the operation start authentication means and the operation continuation authentication means is characterized by comprising: a detecting means for reading biometric information of the operator; a storage means for storing the biometric information; a checking means for identifying the operator by checking detection data read by the detecting means against stored data that is stored in the storage means; and a permissionlauthentication means for permitting and authenticating the start of the operation of the device or the continuation of the operation on the basis of a result of the checking operation by the checking means.

Also, the operation start authentication means is characterized by comprising:
a fingerprint sensor that is the detecting means and reads, prior to the operation of the device, a fingerprint image of the operator as the first biometric information; a fingerprint data storage means that is the storage means and records fingerprint data; a fingerprint checking means that is the checking means and identifies the operator by checking fingerprint data obtained by the fingerprint sensor against fingerprint data stored in the fingerprint data storage means; and a first permission/authentication means that is the permission/authentication means and permits and authenticates the start of the operation of the device on the basis of a result of the checking operation by the fingerprint checking means.

Also, the operation continuation authentication means is characterized by comprising: a camera that is the detecting means and reads a facial image of the operator as the second biometric information during the operation of the device; a facial feature data storage means that is the storage means and records facial feature data; a facial feature checking means that is the checking means and specifies the operator by checking facial feature data obtained by the camera against facial feature data stored in the facial feature data storage means; and a second permissionlauthentication means that is the permission/authentication means and permits and authenticates the continuation of the operation of the device on the basis of a result of the checking operation by the facial feature checking means.

Also, the operation continuation authentication means is characterized by comprising: a microphone that is the detecting means and reads voice of the operator as the second biometric information during the operation of the device; a voiceprint data storage means that is the storage means and records voiceprint data; a voiceprint checking means that is the checking means and identifies the operator by checking voiceprint data obtained by the microphone against voiceprint data stored in the voiceprint data storage means; and a second permission/authentication means that is the permission/authentication means and authenticates the continuation of the operation of the device on the basis of a result of the checking operation by the voiceprint checking means.

Also, the permission/authentication means of the operation start authentication means and the permission/authentication means of the operation continuation authentication means are characterized in that they are constructed integrally as a single component.

Also, the facial feature data storage means is characterized in that it temporarily stores the latest facial feature data of the operator that is obtained by the camera when a result of the fingerprint checking by the fingerprint checking means is OK, and the facial feature checking means is characterized in that it identifies the operator by checking facial feature data obtained by the camera against facial feature data that is temporarily stored in the facial feature data storage means.

Also, the operation continuation authentication means is characterized in that after it is permitted to start the operation of the device, the operation continuation authentication means repeatedly authenticates the continuation of the operation on the basis of checking operations that use the second biometric information read at predetermined time intervals.

Further, the operation continuation authentication means is characterized in that it reads the second biometric information at all times and, if a result of checking operations using the read second biometric information is negative, disables a further operation and repeatedly authenticates the continuation of the operation on the basis of checking operations that use the read second biometric information.

### BRIEF DESCRIPTION OF THE DRAWINGS

FIG. 1 is a functional block diagram showing an illustrative device operation authentication system ;
FIG. 2 is a flowchart illustrating an operation of the device operation authentication system of fig. 1;
FIG. 3 is a flowchart illustrating an operation of a second illustrative device operation authentication system ;
FIG. 4 is a flowchart illustrating an operation of a third illustrative device operation authentication system ;
FIG. 5 is a functional block diagram showing a device operation authentication system according to a first embodiment to a third embodiment of the present invention;
FIG. 6 is a flowchart illustrating an operation of the device operation authentication system according to the first embodiment of the present invention;
FIG. 7 is a flowchart illustrating an operation of the device operation authentication system according to the second embodiment of the present invention;
FIG. 8 is a flowchart illustrating an operation of the device operation authentication system according to the third embodiment of the present invention;
FIG. 9 is a functional block diagram showing a fourth illustrative device operation authentication system ;
FIG. 10 is a flowchart illustrating an operation of the device operation authentication system of fig. 9 ;
FIG. 11 is a flowchart illustrating an operation of a fifth illustrative device operation authentication system ;
FIG. 12 is a flowchart illustrating an operation of a sixth illustrative device operation authentication system ;
FIG. 13 is a functional block diagram showing a device operation authentication system according to a fourth embodiment to a twelfth embodiment of the present invention;
FIG. 14 is a flowchart illustrating an operation of the device operation authentication system according to the fourth embodiment of the present invention;
FIG. 15 is a flowchart illustrating an operation of the device operation authentication system according to the fifth embodiment of the present invention;
FIG. 16 is a flowchart illustrating an operation of the device operation authentication system according to the sixth embodiment of the present invention;
FIG. 17 is a functional block diagram showing a conventional device operation permission/authentication system that is based on a fingerprint checking technique; and
FIG. 18 is a flowchart illustrating an operation of the conventional device operation permission/authentication system that is based on the fingerprint checking technique.

### BEST MODE FOR CARRYING OUT THE INVENTION

### <First Embodiment>

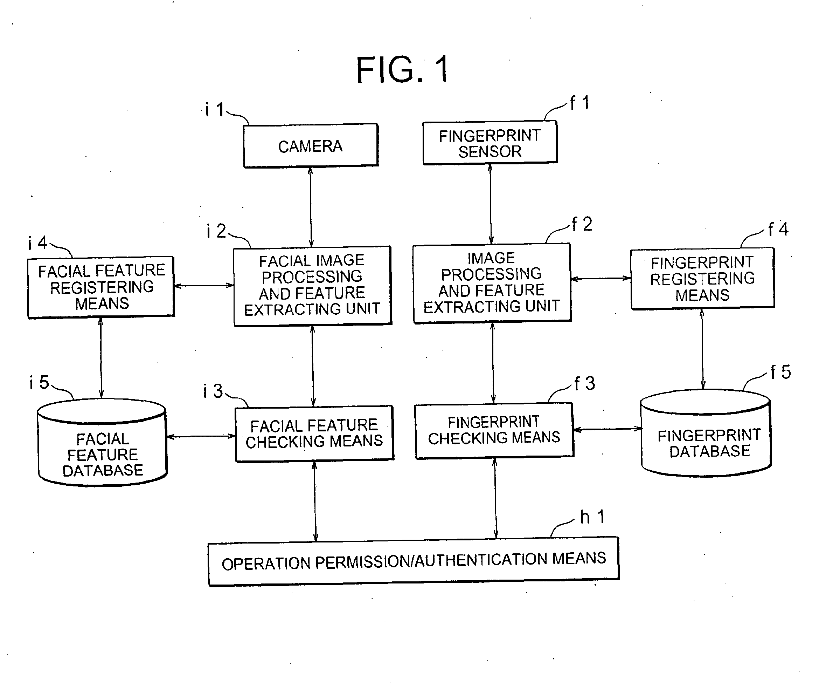

FIG. 1 is a functional block diagram showing an illustrative device operation permission/authentication system.

In FIG. 1, construction elements that are given reference numerals f1 to f5 are the same as those in the conventional example and therefore are not described. In the device operation permission/authentication system shown in FIG. 1, in addition to an operation start authentication means that is the same as in the conventional example and permits and authenticates start of operation, there are provided new construction elements that are a camera i1 for reading a facial image, a facial image processing and feature extracting unit i2 for extracting features by performing image processing on the facial image from the camera i1, a facial feature registering means i4 for registering facial feature data from the facial image processing and feature extracting unit i2, a facial feature database i5 for managing the facial feature data registered by the facial feature registering means i4, a facial feature checking means i3 for performing a checking operation by comparing the facial feature data managed by the facial feature database i5 with facial feature data from the facial image processing and feature extracting unit i2, and an operation permission/authentication means h1 for authenticating start of operation of a device and continuation of the operation by utilizing both of the fingerprint checking means f3 and the facial feature checking means i3.

In more detail, the device operation permission/authentication system includes an operation start authentication means and an operation continuation authentication means. Prior to operation of an device, the operation start authentication means reads a fingerprint as first biometric information of an operator, checks the first biometric information against prestored information, and permits and authenticates start of the operation on the basis of a result of the checking operation. During the operation of the device, the operation continuation authentication means reads a facial image in a non-contact manner as second biometric information that is different from the fingerprint information of the operator, checks the second biometric information against prestored information, and permits and authenticates continuation of the operation on the basis of a result of the checking operation.

Here, each of the operation start authentication means and the operation continuation authentication means includes a detecting means for reading biometric information of an operator, a storage means for storing the biometric information, a checking means for identifying the operator by checking detection data read by the detecting means against storage data stored in the storage means, and a permission/authentication means for permitting and authenticating start of operation of a device or continuation of the operation on the basis of a result of the checking operation by the checking means.

In more detail, the operation start authentication means corresponds to a portion including the fingerprint sensor f1, the image processing and feature extracting unit f2, the fingerprint checking means f3, the fingerprint registering means f4, the fingerprint database f5, and the operation permission/authentication means h1. The operation continuation authentication means corresponds to a portion including the camera i1, the facial image processing and feature extracting unit i2, the facial feature checking means i3, the facial feature registering means i4, the facial feature database i5, and the operation permission/authentication means h1. Among these construction elements, the operation permission/authentication means h1 is constructed by integrating a permissionlauthentication means for permitting and authenticating start of operation of a device with a permission/authentication means for permitting and authenticating continuation of the operation.

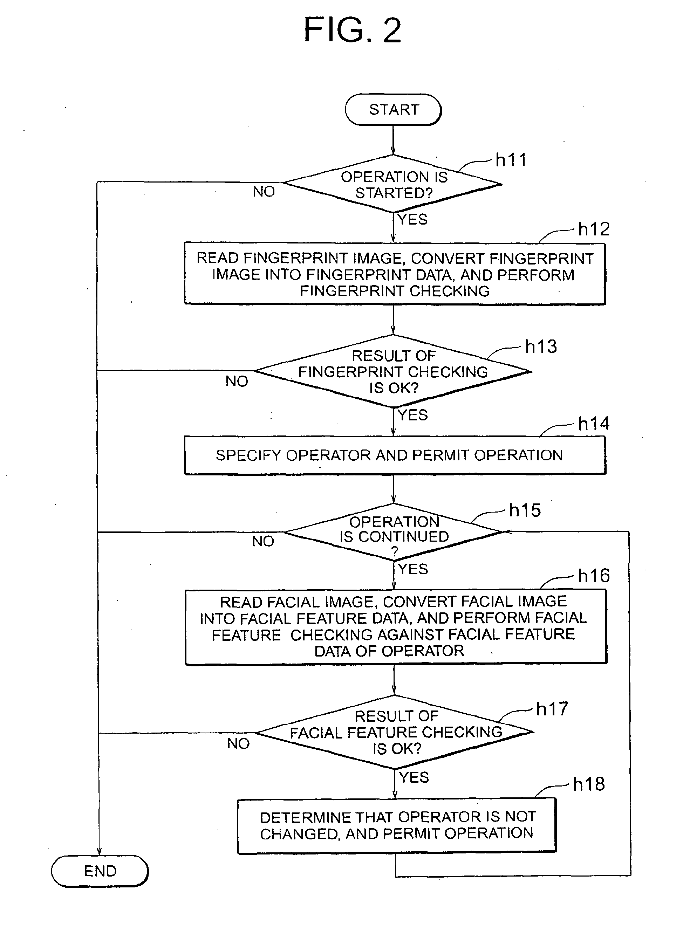

Next, an operation according to the foregoing construction will be described with reference to a flowchart shown in FIG. 2.

First, if an operator tries to start operation of a device (step h11), the fingerprint sensor f1 reads a fingerprint image, the image processing and feature extracting unit f2 converts the fingerprint image into fingerprint data, and the fingerprint checking means f3 performs fingerprint checking by comparing the fingerprint data with fingerprint data in the fingerprint database f5 (step h12). Then, if a result of the fingerprint checking is OK, the operation permission/authentication means h1 specifies the operator and permits him/her to start the operation of the device (steps h13 and h14).

Next, if an operator tries to continue the operation of the device (step h15), the camera i1 reads a facial image, the facial image processing and feature extracting unit i2 converts the facial image into facial feature data, and the facial feature checking means i3 performs facial feature checking by comparing the facial feature data with operator's facial feature data that was determined in step h14 (step h16). If a result of the facial feature checking is OK (step h17), the operation permission/authentication means h1 determines that the operator is not changed and permits him/her to continue the operation of the device (step h18).

Accordingly, in the system described above, even after it is permitted to start operation of a device as a result of fingerprint checking, continuation of the operation of the device is permitted and authorized by reading a facial image in a non-contact manner and performing facial feature checking. As a result, there is achieved an effect of compensating for a problem of the conventional technique that a security level is lowered because it is possible for anyone to operate a device during continuation of operation. In addition, facial feature checking is performed by the checking means in a non-contact manner. Therefore, it is not necessary to affix a finger for fingerprint checking each time operation of a device is to be continued. As a result, convenience is not sacrificed.

### <Second illustrative system>

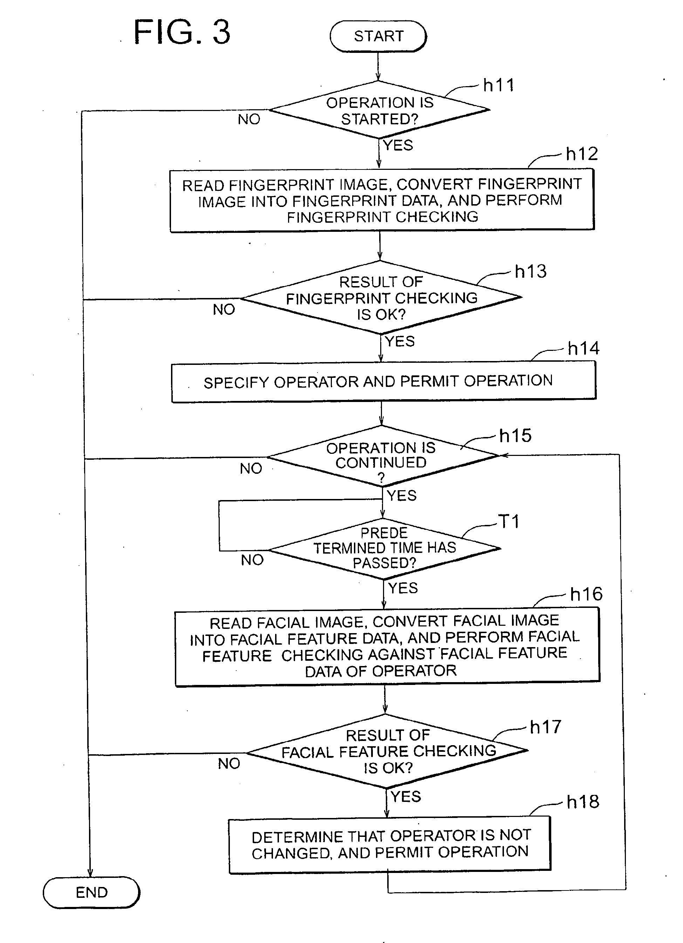

FIG. 3 corresponds to the flowchart shown in FIG. 2 that illustrates the operation according to the first illustrative device operation permission/authentication system described above, and is a flowchart illustrating an operation according to the a second illustrative system. It should be noted here that a device operation permission/authentication system according to the second illustrative system has the same construction as in the functional block diagram shown in FIG. 1.

The flowchart shown in FIG. 3 according to the second illustrative system differs from the flowchart shown in FIG. 2 according to the first illustrative system in that if an operator tries to continue operation of a device after start of the operation of the device is permitted by the operation permission/authentication means h1 (step h15), it is judged whether a predetermined time period has passed using a built-in timer mechanism and continuation of the operation is repeatedly authenticated on the basis of checking operations that use facial feature data read at intervals of the predetermined time period (steps h15, T1, and h16, or steps h18, and h15).

Accordingly, in the second illustrative system, for instance, when an authorized operator of a personal computer, who has been permitted to operate a specific personal computer, leaves a position for operating the personal computer and is present at a different place for some reason, even if another user who is not authorized tries to operate the personal computer, a facial feature checking function based on a facial image read by the camera i1 is activated to perform facial feature checking at the predetermined time intervals. Accordingly, if a result of the checking operation is negative because the facial features differ from those of the person who is authorized and permitted to operate the personal computer, a message showing that the operation of the personal computer is to be disabled is outputted on a screen of the personal computer at this point in time and the operation of the personal computer is interrupted. As a result, it becomes impossible for anyone other than a specific operator to operate the personal computer. In this manner, there is enhanced a security level concerning operation of a personal computer.

### <Third illustrative system>

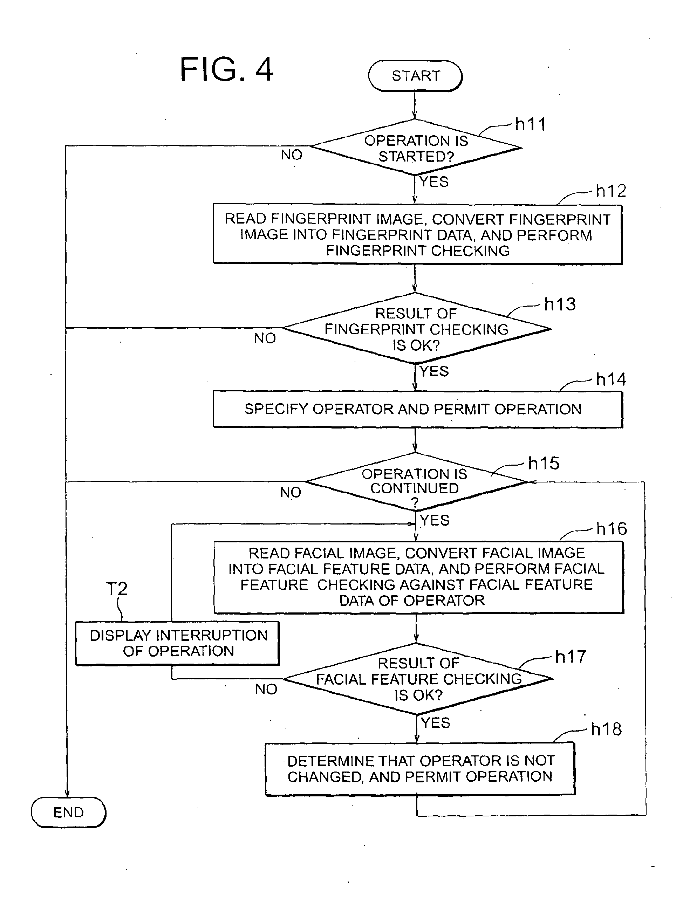

FIG. 4 corresponds to the flowchart shown in FIG. 2 that illustrates the operation according to the first illustrative system described above, and is a flowchart illustrating an operation according to a third illustrative system. It should be noted here that a device operation permission/authentication system according to a third illustrative system has the same construction as in the functional block diagram shown in FIG. 1.

The flowchart shown in FIG. 4 according to the third illustrative system differs from the flowchart shown in FIG. 2 according to the first illustrative system in that if an operator tries to continue operation of a device after it is permitted to start the operation of the device by the operation permission/authentication means h1 (step h15), the camera i1 constantly reads facial images of the operator and, if a result of facial feature checking using the read facial images is negative, a message showing that a further operation is to be interrupted is displayed and continuation of the operation is repeatedly authorized on the basis of checking operations that use the read facial images (steps h15, h16, h17, T2, and h16).

Accordingly, in the third illustrative system, for instance, when an authorized operation of a personal computer, who has been permitted to operate a specific personal computer, leaves a position for operating the personal computer and is present at a different place for some reason, a facial feature checking function based on facial images read by the camera i1 is performed at all times. As a result, even if another user who is not authorized tries to operate the personal computer, the facial feature checking is always carried out and a checking result for the unauthorized user becomes negative. At this point in time, a message showing that the operation of the personal computer is to be interrupted is outputted on a screen and the operation of the personal computer is interrupted. In this manner, there is enhanced a security level concerning operation of a personal computer by a specific operator.

### <First Embodiment>

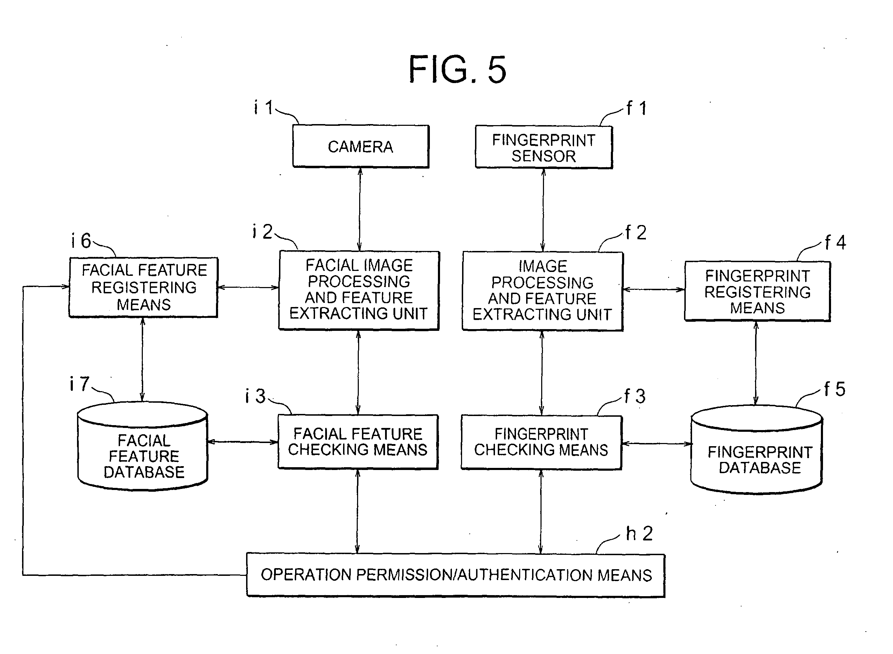

FIG. 5 is a functional block diagram showing a device operation permission/authentication system according to a (first) embodiment of the present invention.

In FIG. 5, the same construction elements as in the first shown in FIG. 1 are given the same reference numerals and are not described. As new construction elements, reference numeral i6 denotes a facial feature temporary registering means that is provided in place of the facial feature registering means i4 of the first embodiment and temporarily registers facial feature data from the facial image processing and feature extracting unit i2, and reference numeral i7 represents a facial feature temporary storage unit that is provided in place of the facial feature database of the first embodiment. When a result of the fingerprint checking by the fingerprint checking means f3 is positive, the facial feature checking means i3 identifies an operator by checking facial feature data read by the camera i1 against facial feature data that is temporarily stored in the facial feature temporary storage unit i7. Further, reference numeral h2 denotes an operation permission/authentication means according to the first embodiment.

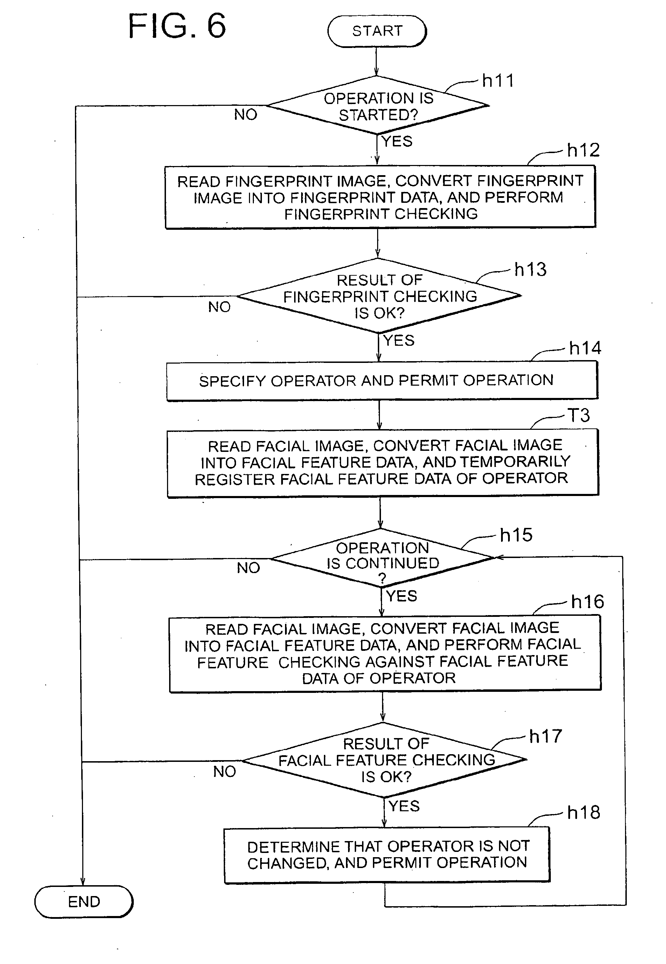

Next, an operation according to the foregoing construction will be described with reference to a flowchart shown in FIG. 6.

The flowchart shown in FIG. 6 according to the first embodiment differs from the flowchart shown in FIG. 2 according to the first illustrative system in that after an operator is specified through fingerprint checking when operation of a device is started (steps h11 to h14), the latest facial feature data of the operator is further read by the camera i1 and is stored in the facial feature temporary storage unit i7 (step T3). Following this, the facial feature checking means i3 performs facial feature checking by comparing facial feature data with the facial feature data in the facial feature temporary storing unit i7 and, if a result of the facial feature checking is positive, the operation permission/authentication means h2 determines that the operator is not changed and permits him/her to continue the operation of the device (steps h15 to h18).

Accordingly, in the fourth embodiment described above, even after start of operation of a device is permitted as a result of fingerprint checking, continuation of the operation of the device is permitted by performing facial feature checking. In this manner, there is achieved an effect of compensating for a problem of the conventional technique that a security level is lowered because it is possible for anyone to operate a device during continuation of the operation.

In addition, facial feature checking is performed by the checking means in a non-contact manner. Therefore, it is not necessary to affix a finger for fingerprint checking each time operation of a device is to be continued. As a result, convenience is not sacrificed.

Further, the comparison is made against facial feature data obtained when a result of fingerprint checking is OK to perform facial feature checking, so that even with facial feature checking that utilizes facial images which greatly vary over time, it is possible to perform the checking operation with relative stability. In particular, the latest facial feature data of an operator obtained by a camera when the result of fingerprint checking is positive is temporarily stored and is used to perform facial feature checking. Therefore, it is possible to perform the checking operation using the latest facial feature data obtained only seconds ago. As a result, it is possible to perform facial feature checking with high precision in comparison with a case of using facial feature data that was registered five or six months ago or one year ago.

### <Second Embodiment>

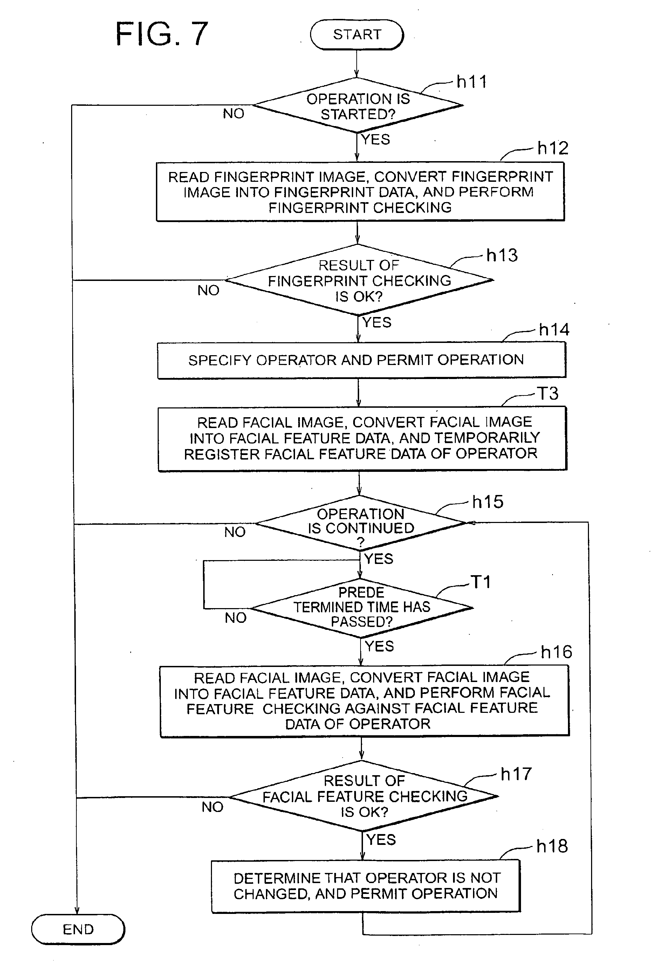

FIG. 7 corresponds to the flowchart shown in FIG. 6 that illustrates the operation according to the first embodiment described above, and is a flowchart illustrating an operation according to a second embodiment. It should be noted here that a device operation permission/authentication system according to the second embodiment has the same construction as in the functional block diagram shown in FIG. 5.

The flowchart shown in FIG. 7 according to the second embodiment differs from the flowchart shown in FIG. 6 according to the first embodiment in that if an operator tries to continue operation of a device after start of the operation of the device is permitted by the operation permission/authentication means h2 (step h15), it is judged whether a predetermined time period has passed using a built-in timer mechanism and continuation of the operation is repeatedly authenticated on the basis of checking operations that use facial feature data read at intervals of the predetermined time period (steps h15, T1, and h16, or steps h18, and h15).

Accordingly, in the second embodiment, for instance, when an authorized operator of a personal computer, who has been permitted to operate a specific personal computer, leaves a position for operating the personal computer and is present at a different place for some reason, even if another user who is not authorized tries to operate the personal computer, a facial feature checking function based on a facial image read by the camera i1 is activated to perform facial feature checking at the predetermined time intervals. Accordingly, if a result of the checking operation is negative because the facial features differ from those of the person who is authorized and permitted to operate the personal computer, a message showing that the operation of the personal computer is to be disabled is outputted on a screen of the personal computer at this point in time and the operation of the personal computer is interrupted. As a result, it becomes impossible for anyone other than a specific operator to operate the personal computer. In this manner, there is enhanced a security level concerning operation of a personal computer by a specific operator.

### <Third Embodiment>

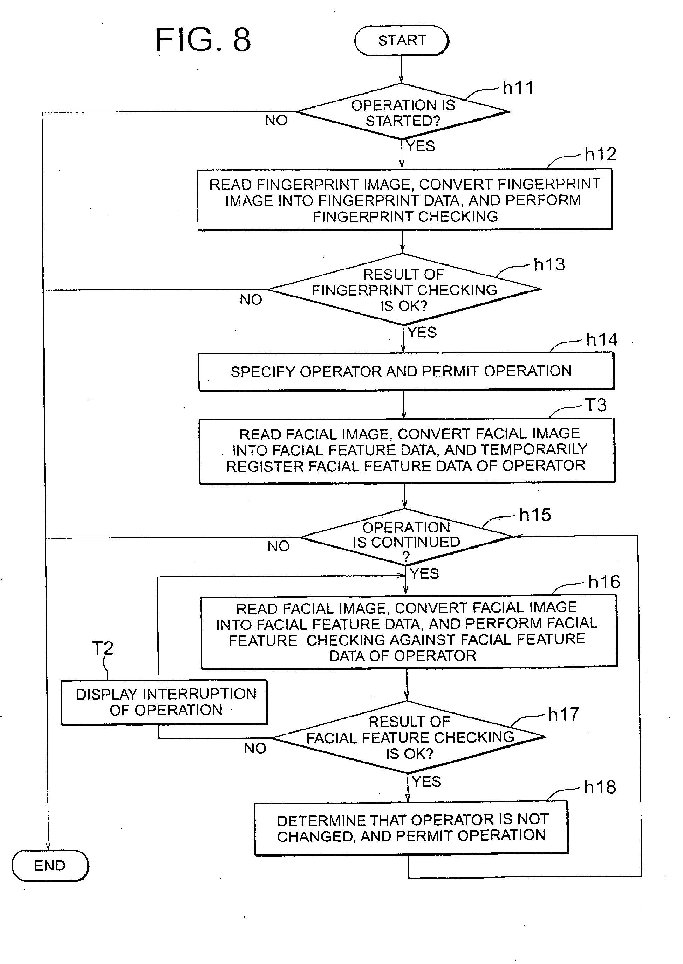

FIG. 8 corresponds to the flowchart shown in FIG. 6 that illustrates a operation according to the first embodiment described above, and is a flowchart illustrating an operation according to the third embodiment. It should be noted here that a device operation permission/authentication system according to the third embodiment has the same construction as in the functional block diagram shown in FIG. 5.

The flowchart shown in FIG. 8 according to the third embodiment differs from the flowchart shown in FIG. 6 according to the first embodiment in that if an operator tries to continue operation of a device after it is permitted to start the operation of the device by the operation permission/authentication means h2 (step h15), the camera i1 constantly reads facial images of the operator and, if a result of facial feature checking using the read facial images is negative, a message showing that a further operation is to be interrupted is displayed and continuation of the operation is repeatedly authorized on the basis of checking operations that use the read facial images (steps h15, h16, h17, T2, and h16).

Accordingly, in the third embodiment, for instance, when an authorized operator of a personal computer, who has been permitted to operate a specific personal computer, leaves a position for operating the personal computer and is present at a different place for some reason, a facial feature checking function based on facial images read by the camera i1 is performed at all times. As a result, even if another user who is not authorized tries to operate the personal computer, the facial feature checking is always carried out and a checking result for the unauthorized user becomes negative. At this point in time, a message showing that the operation of the personal computer is to be interrupted is outputted on a screen and the operation of the personal computer is interrupted. In this manner, there is enhanced a security level concerning operation of a personal computer by a specific operator.

### <Fourth illustrative system>

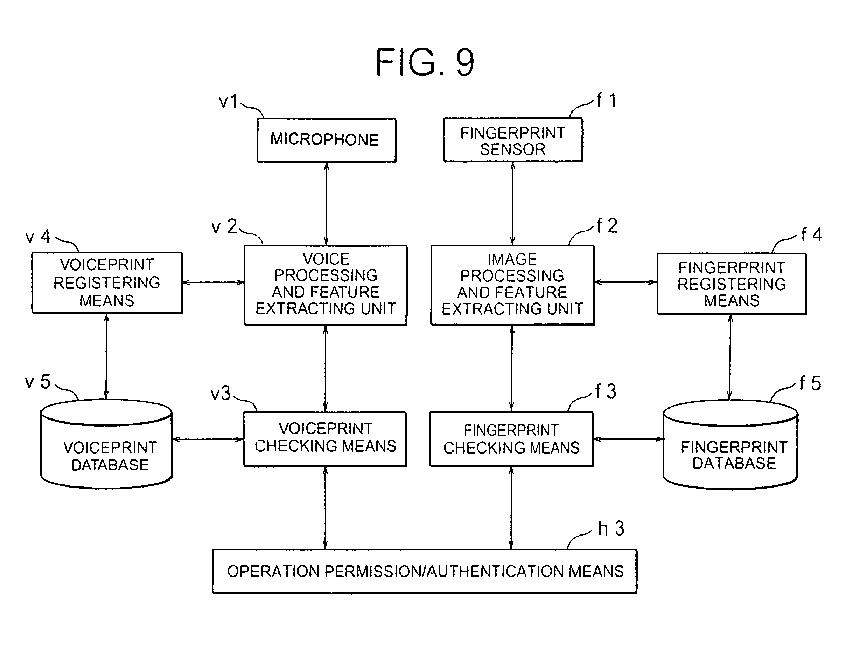

FIG. 9 is a functional block diagram showing a fourth illustrative device operation permission/authentication system.

Construction elements that are given reference numerals f1 to f5 are the same as those in the conventional example and therefore are not described. As new construction elements, there are provided a microphone v1 for reading voice, a voice processing and feature extracting unit v2 for extracting features by performing voice processing on the voice from the microphone v1, a voiceprint registering means v4 for registering voiceprint data from the voice processing and feature extracting unit v2, a voiceprint database v5 for managing the voiceprint data registered by the voiceprint registering means v4, a voiceprint checking means v3 for performing a checking operation by comparing voiceprint data managed in the voiceprint database v5 with voiceprint data that is sent for the checking operation from the voice processing and feature extracting unit v2, and an operation permission/authentication means h3 for authenticating start of operation of a device and continuation of the operation by utilizing both of the fingerprint checking means f3 and the voiceprint checking means v3.

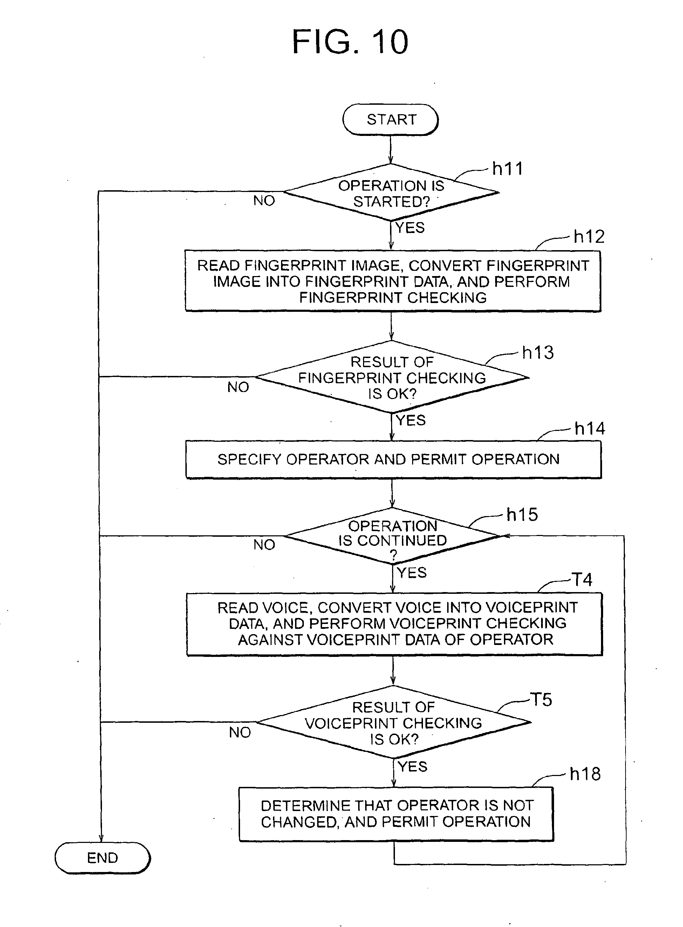

Next, an operation according to the foregoing construction will be described with reference to the flowchart shown in FIG. 10.

The flowchart shown in FIG. 10 according to the fourth illustrative system differs from the flowchart shown in FIG. 2 according to the first illustrative system in that after an operator is specified through fingerprint checking when operation of a device is started (steps h11 to h14), if an operator tries to continue the operation of the device, the microphone v1 reads voice of the operator, the voice processing and feature extracting unit v2 converts the voice into voiceprint data, and the voiceprint checking means v3 performs voiceprint checking by comparing the voiceprint data with operator's voiceprint data that was determined in step h14 and is stored in the voiceprint database v5 (step T4). If a result of the voiceprint checking is OK in step T5, the processing proceeds to step h18 in which the operation permission/authentication means h3 determines that the operator is not changed and permits him/her to continue the operation of the device.

Accordingly, in the fourth illustrative system, even after it is permitted to start operation of a device as a result of fingerprint checking, continuation of the operation of the device is permitted by performing voiceprint checking. As a result, there is achieved an effect of compensating for a problem of the conventional technique that a security level is lowered because it is possible for anyone to operate a device during continuation of the operation. In addition, voiceprint checking is performed by the checking means in a non-contact manner. Therefore, it is not necessary to affix a finger for fingerprint checking each time operation of a device is to be continued. As a result, convenience is not sacrificed.

### <Fifth illustrative system>

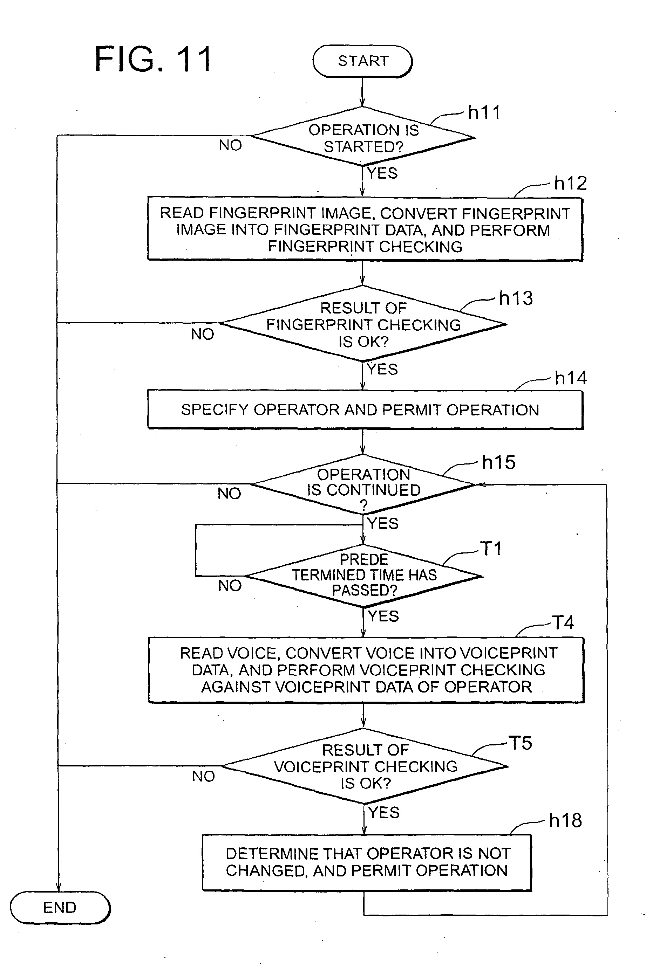

FIG. 11 corresponds to the flowchart shown in FIG. 10 that illustrates the operation according to the fourth illustrative system described above, and is a flowchart illustrating an operation according to a fifth illustrative system. It should be noted here that a device operation permission/authentication system according to the fifth illustrative system has the same construction as in the functional block diagram shown in FIG. 9.

The flowchart shown in FIG. 11 according to the fifth illustrative system differs from the flowchart shown in FIG. 10 according to the fourth illustrative system in that if an operator tries to continue operation of a device after start of the operation of the device is permitted by the operation permission/authentication means h3 (step h15), it is judged whether a predetermined time period has passed using a built-in timer mechanism and continuation of the operation is repeatedly authenticated on the basis of checking operations that use voiceprint data obtained at intervals of the predetermined time period (steps h15, T1, T4, T5, h18, and h15).

Accordingly, for instance, when an authorized operator of a personal computer, who has been permitted to operate a specific personal computer, leaves a position for operating the personal computer and is present at a different place for some reason, even if another user who is not authorized tries to operate the personal computer, a voiceprint checking function based on voice read by the microphone v1 is activated to perform voiceprint checking at the predetermined time intervals. Accordingly, if a result of the checking operation is negative because the voiceprint differs from that of the person who is authorized and permitted to operate the personal computer, a message showing that the (further) operation of the personal computer is to be disabled is outputted on a screen of the personal computer at this point in time and the operation of the personal computer is interrupted. As a result, it becomes impossible for anyone other than a specific operator to operate the personal computer. In this manner, there is enhanced a security level concerning operation of a personal computer by a specific operator.

### <Sixth illustrative system>

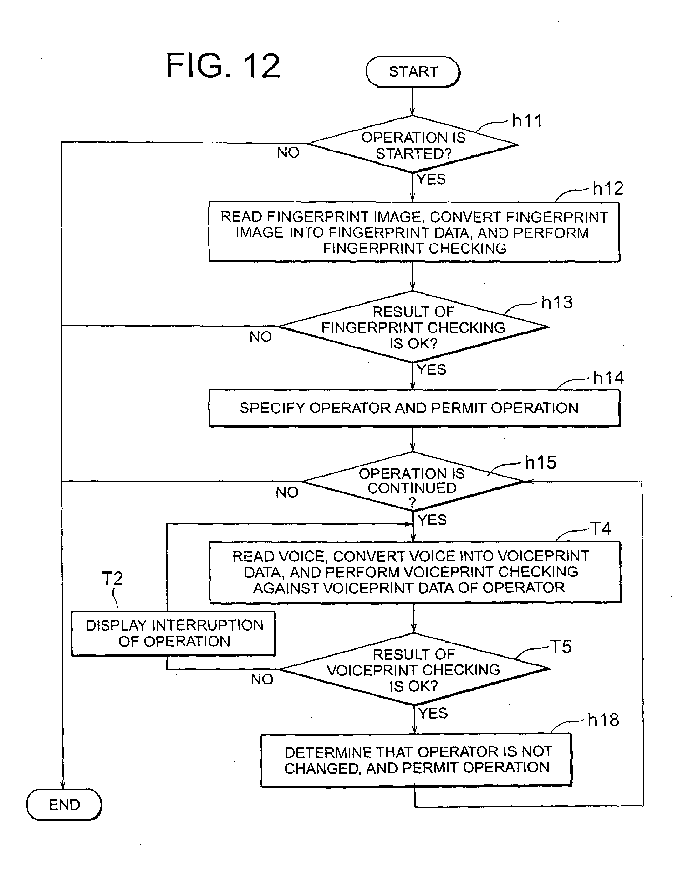

FIG. 12 corresponds to the flowchart shown in FIG. 10 that illustrates the operation according to the fourth illustrative system described above, and is a flowchart illustrating an operation according to a sixth illustrative system. It should be noted here that a device operation permission/authentication system according to the sixth illustrative system has the same construction as in the functional block diagram shown in FIG. 9.

The flowchart shown in FIG. 12 differs from the flowchart shown in FIG. 10 in that if an operator tries to continue operation of a device after it is permitted to start the operation of the device by the operation permission/authentication means h3 (step h15), the microphone v1 constantly reads voice of the operator and, if a result of voiceprint checking using the read voice is negative, a message showing that a further operation is to be interrupted is displayed and continuation of the operation is repeatedly authorized on the basis of checking operations that use the obtained voice (steps h15, T4, T5, T2, and T4).

Accordingly, for instance, when an authorized operator of a personal computer, who has been permitted to operate a specific personal computer, leaves a position for operating the personal computer and is present at a different place for some reason, a voice print checking function based on voice read by the microphone v1 is performed at all times. As a result, even if another user who is not authorized tries to operate the personal computer, the voiceprint checking is always carried out and a checking result for the unauthorized user becomes negative. At this point in time, a message showing that the operation of the personal computer becomes impossible is outputted on a screen and the operation of the personal computer is interrupted. In this manner, there is enhanced a security level concerning operation of a personal computer by a specific operator.

Also, when an authorized operator of a mobile phone, who is permitted to operate a specific mobile telephone, leaves the mobile telephone for some reason, for instance, a voice reading function is executed by the microphone at all times during the operation of the mobile telephone. As a result, when an unauthorized person operates the mobile telephone, the voiceprint of the unauthorized person does not match the voiceprint of the person who is authorized and permitted to operate the mobile telephone and a result of voiceprint checking becomes negative. At this point in time, a display or the like showing that the operation of the mobile telephone is to be disabled is outputted to the mobile telephone and the operation of the telephone is interrupted. In this manner, there is realized a system that enhances a security level for a specific operator concerning operation of a mobile telephone.

### <Fourth Embodiment>

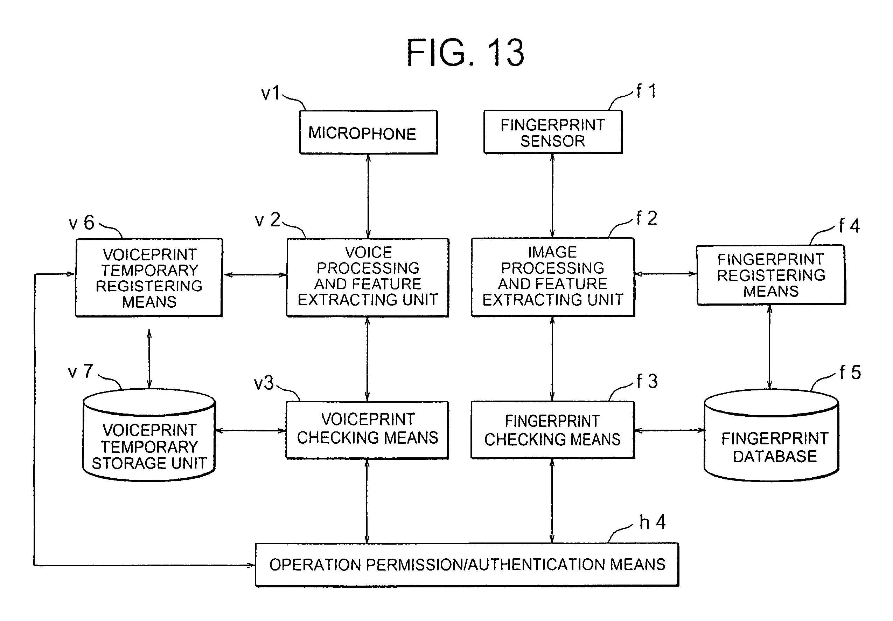

FIG. 13 is a functional block diagram showing a device operation permission/authentication system according to a fourth embodiment of the present invention.

In FIG. 13, the same construction elements as in the fourth illustrative system shown in FIG. 9 are given the same reference numerals and are not described. As new construction elements, reference numeral v6 denotes a voiceprint temporary registering means that is provided in place of the voiceprint registering means v4 of the seventh embodiment and temporarily registers voiceprint data from the voice processing and feature extracting unit v2, and reference numeral v7 represents a voiceprint temporarily storing unit that is provided in place of the facial feature database of the seventh embodiment. The voiceprint checking means v3 identifies an operator by checking voiceprint data, which is obtained by the microphone v1 when a result of fingerprint checking is positive, against voiceprint data that is temporarily stored in the voiceprint temporarily storing unit v7. Further, reference numeral h4 represents an operation permission/authentication means of the fourth embodiment.

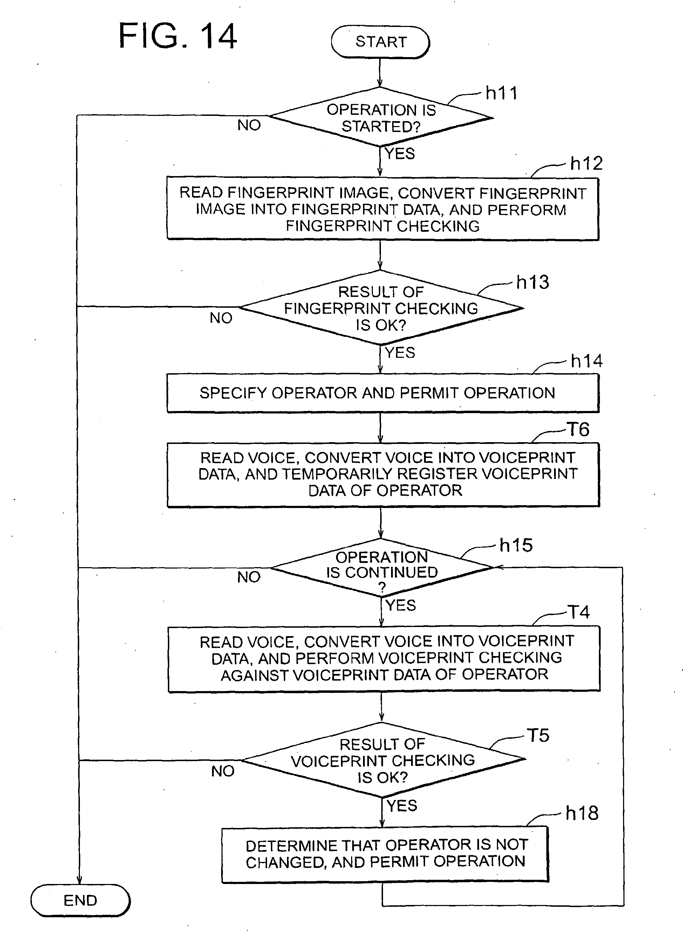

Next, an operation according to the foregoing construction will be described with reference to the flowchart shown in FIG. 14.

The flowchart shown in FIG. 14 according to the fourth embodiment differs from the flowchart shown in FIG. 10 according to the fourth illustrative system in that after an operator is specified through fingerprint checking when operation of a device is started (steps h11 to h14), the latest voiceprint data of the operator is further obtained by the microphone v1 and is stored in the voiceprint temporary storage unit v7 (step T6). Following this, the voiceprint checking means v3 performs voiceprint checking by comparing voiceprint data with the voiceprint data in the voiceprint temporary storing unit v7 and, if a result of the voiceprint checking is positive, the operation permission/authentication means h4 determines that the operator is not changed and permits him/her to continue the operation of the device (steps h15, T4, T5, and h18).

Accordingly, in the fourth embodiment described above, even after it is permitted to start operation of a device as a result of fingerprint checking, continuation of the operation of the device is permitted by performing voiceprint checking. As a result, there is achieved an effect of compensating for a problem of the conventional technique that a security level is lowered because it is possible for anyone to operate a device during the continuation of the operation.

Also, the voiceprint checking is performed by the checking means in a non-contact manner. Therefore, it is not necessary to affix a finger each time operation of a device is to be continued as in the case of fingerprint checking. As a result, convenience is not sacrificed.

Further, the comparison is made against voiceprint data obtained when a result of voiceprint checking is OK to perform voiceprint checking, so that even with voiceprint checking that utilizes voiceprint data which greatly varies over time, it is possible to perform the checking operation with relative stability. In particular, the latest voiceprint data of an operator that is obtained by a microphone when a result of fingerprint checking is positive is temporarily stored and is used to perform voiceprint checking. Therefore, it is possible to perform the checking operation using the latest voiceprint data obtained only seconds ago. As a result, it is possible to perform voiceprint checking with high precision in comparison with a case of using voiceprint data that was registered five or six months ago or one year ago.

### <Fifth Embodiment>

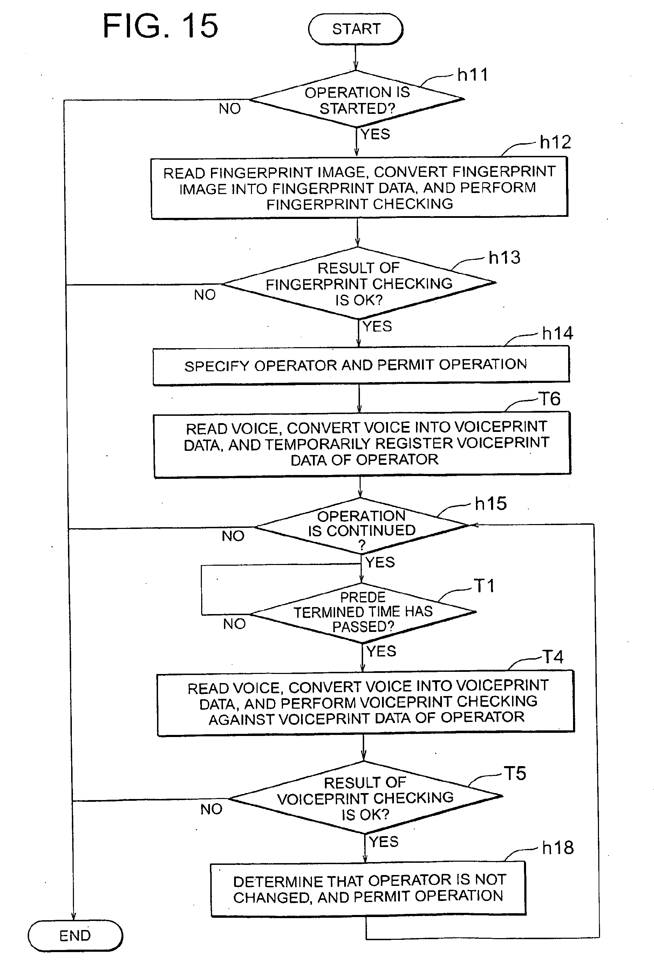

FIG. 15 corresponds to the flowchart shown in FIG. 14 that illustrates the operation according to the fourth embodiment described above, and is a flowchart illustrating an operation according to a fifth embodiment. It should be noted here that a device operation permission/authentication system according to the fifth embodiment has the same construction as in the functional block diagram shown in FIG. 13.

The flowchart shown in FIG. 15 according to the fifth embodiment differs from the flowchart shown in FIG. 14 according to the fourth embodiment in that if an operator tries to continue operation of a device after start of the operation of the device is permitted by the operation permission/authentication means h4 (step h15), it is judged whether a predetermined time period has passed using a built-in timer mechanism and continuation of the operation is repeatedly authenticated on the basis of checking operations that use voiceprint data obtained at intervals of the predetermined time period (steps h15, T1, T4, T5, h18 and h15).

Accordingly, in the fifth embodiment, for instance, when an authorized operator of a personal computer, who has been permitted to operate a specific personal computer, leaves a position for operating the personal computer and is present at a different place for some reason, even if another user who is not authorized tries to operate the personal computer, a voiceprint checking function based on voice read by the microphone v1 is activated to perform voiceprint checking at the predetermined time intervals. Accordingly, if a result of the checking operation is negative because the voiceprint differs from that of the person who is authorized and permitted to operate the personal computer, a message showing that the operation of the personal computer is to be disabled is outputted on a screen of the personal computer at this point in time and the operation of the personal computer is interrupted. As a result, it becomes impossible for anyone other than a specific operator to operate the personal computer. In this manner, there is enhanced a security level concerning operation of a personal computer by a specific operator.

### <Sixth Embodiment>

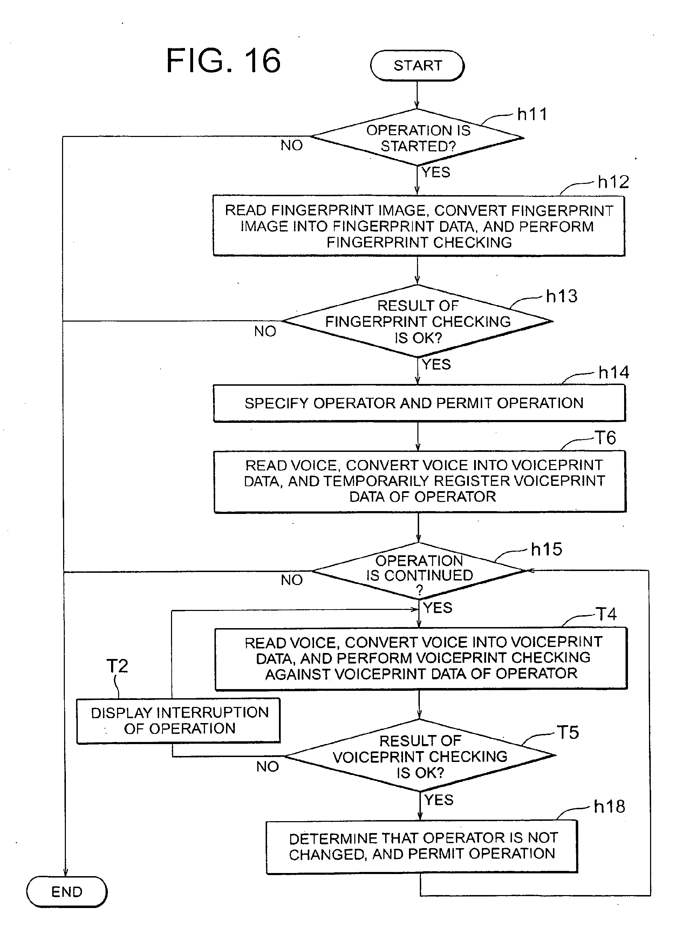

FIG. 16 corresponds to the flowchart shown in FIG. 14 that illustrates the operation according to the fourth embodiment described above, and is a flowchart illustrating an operation according to a sixth embodiment. It should be noted here that a device operation permission/authentication system according to the sixth embodiment has the same construction as in the functional block diagram shown in FIG. 13.

The flowchart shown in FIG. 16 according to the sixth embodiment differs from the flowchart shown in FIG. 14 according to the fourth embodiment in that if an operator tries to continue operation of a device after it is permitted to start the operation of the device by the operation permission/authentication means h4 (step h15), the microphone v1 constantly reads voiceprint of the operator and, if a result of voice checking using the obtained voice is negative, a message showing that a further operation is to be interrupted is displayed and continuation of the operation is repeatedly authorized on the basis of voiceprint checking operations that use the obtained voice (steps h15, T4, T5, T2, and T4).

Accordingly, in the sixth embodiment, for instance, when an authorized operator of a personal computer, who has been permitted to operate a specific personal computer, leaves a position for operating the personal computer and is present at a different place for some reason, a voiceprint checking function based on voice read by the microphone v1 is performed at all times. As a result, even if another user who is not authorized tries to operate the personal computer, the voiceprint checking is always carried out and a checking result for the unauthorized user becomes negative. At this point in time, a message showing that the operation of the personal computer becomes impossible is outputted on a screen and the operation of the personal computer is interrupted. In this manner, there is enhanced a security level concerning operation of a personal computer by a specific operator.

### INDUSTRIAL APPLICABILITY

As described above, with the present invention, prior to operation of a device, first biometric information of an operator is read and is checked against prestored information and start of the operation is permitted and authenticated on the basis of a result of the checking operation. Also, during the operation of the device, second biometric information that is different from the first biometric information of the operator is read in a non-contact manner and is checked against prestored information, and continuation of the operation is permitted and authorized on the basis of a result of the checking operation. This makes it possible to provide a device operation permission/authentication system with which it is possible to continue operation of a device without repeating a cumbersome operation like a checking operation performed to start the operation, thereby maintaining convenience and also enhancing a security level.

## Claims

1. A device operation permission and authentication system comprising:
an operation start authentication means (fl, f3, h1) comprising:
a fingerprint sensor (f1) that reads, prior to the operation of the device, a fingerprint image of the operator;
a fingerprint data storage means (f5) that records fingerprint data;
a fingerprint checking means (f3) that identifies the operator by checking fingerprint data obtained by said fingerprint sensor (f1) against fingerprint data stored in said fingerprint data storage means (f5); and
a first permission and authentication means (h1) that permits and authenticates the start of the operation of the device on the basis of a result of the first checking operation by said fingerprint checking means (f3);
the device operation permission and authentication system further comprising an operation continuation authentication means (i1, i3, h1) comprising:
a detecting means (i1, v1) that reads in a non-contact manner second biometric information of the operator during the operation of the device that is different from the fingerprint data;
a data storage means (i7, v7) that temporarily stores a version of the second biometric information obtained by a first reading by said detecting means (i1, v1) that takes place after having permitted and authenticated the start of the operation by the operation start authentication means;
a second checking means (i3, v3) that identifies the operator by checking second biometric information obtained by a second reading by said detecting means against the version of second biometric information temporarily stored in said data storage means (i7, v7); and
a second permission and authentication means (h1) that permits and authenticates the continuation of the operation of the device on the basis of a result of the checking operation by said second checking means (i3, v3) .

2. A device operation permission and authentication system according to claim 1, **characterized in that** said operation continuation authentication means (i1, i3, h1) includes: a camera (i1) as said detecting means that reads a facial image of the operator as said second biometric information during the operation of the device; a facial feature data storage means (i5) as said data storage means that records facial feature data; and a facial feature checking means (i3) as said second checking means that identifies the operator by checking facial feature data obtained by said camera (i1) against facial feature data stored in said facial feature data storage means (i5).

3. A device operation permission and authentication system according to claim 1, **characterized in that** said operation continuation authentication means includes: a microphone (v1) as said detecting means that reads voice of the operator as said second biometric information during the operation of the device; a voiceprint data storage means (v5) as said data storage means that records voiceprint data; and a voiceprint checking means (v3) as said second checking means that identifies the operator by checking voiceprint data obtained by said microphone (v1) against voiceprint data stored in said voiceprint data storage means.

4. A device operation permission and authentication system according to claim 1, **characterized in that** after said operation continuation authentication means (i1, i3, h1) is permitted to start the operation of the device, said operation continuation authentication means (i1, i3, h1) repeatedly authenticates the continuation of the operation on the basis of second checking operations that use the second biometric information read at predetermined time intervals.

5. A device operation permission and authentication system according to claim 1, **characterized in that** said operation continuation authentication means (i1, i3, h1) reads the second biometric information at all times and, if a result of second checking operations using the read second biometric information is negative, disables a further operation and repeatedly authenticates the continuation of the operation on the basis of second checking operations that use the read second biometric information.

## Patentansprüche

1. Ein Gerätbetriebserlaubnis- und Authentifizierungssystem, umfassend:
ein Betriebsstart-Authentifizierungsmittel (fl, f3, h1), umfassend:
einen Fingerabdrucksensor (f1), der ein Fingerabdruckbild des Betreibers liest vor dem Betrieb des Geräts;
ein Fingerabdruckdaten-Speichermittel (f5), das Fingerabdruckdaten aufzeichnet;
ein Fingerabdruck-Überprüfungsmittel (f3), das den Betreiber identifiziert durch Überprüfen von Fingerabdruckdaten, die erhalten werden durch den Fingerabdrucksensor (f1) gegen Fingerabdruckdaten, die gespeichert sind in dem Fingerabdruckdaten-Speichermittel (f5); und
ein erstes Erlaubnis- und Authentifizierungsmittel (h1), das den Start des Betriebs des Geräts erlaubt und authentifiziert auf Basis eines Ergebnisses des ersten Überprüfungsbetriebs durch das Fingerabdruck-Überprüfungsmittel (f3);
wobei das Gerätbetriebserlaubnis- und Authentifizierungssystem ferner ein Betriebsweiterführungs-Authentifizierungsmittel (i1, i3, h1) umfasst, das umfasst:
ein Detektiermittel (i1, v1), das auf eine Nicht-Kontakt-Art und Weise zweite biometrische Information des Betreibers liest während des Betriebs des Geräts, die unterschiedlich ist von den Fingerabdruckdaten;
ein Datenspeichermittel (i7, v7), das temporär eine Version der zweiten biometrischen Information speichert, die erhalten wird durch ein erstes Lesen durch das Detektiermittel (i1, v1), was stattfindet, nachdem der Start des Betriebs durch das Betriebsstart-Authentifizierungsmittel erlaubt und authentifiziert wurde;
ein zweites Überprüfungsmittel (i3, v3), das den Betreiber identifiziert durch Überprüfen von zweiter biometrischer Information, die erhalten wird durch ein zweites Lesen durch das Detektiermittel gegen die Version der zweiten biometrischen Information, die temporär gespeichert ist in dem Datenspeichermittel (i7, v7); und
ein zweites Erlaubnis- und Authentifizierungsmittel (h1), das die Weiterführung des Betriebs des Geräts erlaubt und authentifiziert auf Grundlage eines Ergebnisses des Überprüfungsbetriebs durch das zweite Überprüfungsmittel (i3, v3).

2. Ein Gerätbetriebserlaubnis- und Authentifizierungssystem nach Anspruch 1, **dadurch gekennzeichnet, dass** das Betriebsweiterführungs-Authentifizierungsmittel (i1, i3, h1) enthält: eine Kamera (i1) als das Detektiermittel, das ein Gesichtsbild des Betreibers liest als die zweite biometrische Information während des Betriebs des Geräts; ein Gesichtsmerkmalsdaten-Speichermittel (i5) als das Datenspeichermittel, das Gesichtsmerkmaldaten aufzeichnet; und ein Gesichtsmerkmals-Überprüfungsmittel (i3) als das zweite Überprüfungsmittel, das den Betreiber identifiziert durch Überprüfen von Gesichtsmerkmalsdaten, die erhalten werden durch die Kamera (i1) gegen Gesichtsmerkmalsdaten, die gespeichert werden in dem Gesichtsmerkmalsdaten-Speichermittel (i5).

3. Ein Gerätbetriebserlaubnis- und Authentifizierungssystem nach Anspruch 1, **dadurch gekennzeichnet, dass** das Betriebsweiterführungs-Authentifizierungsmittel enthält: ein Mikrofon (v1) als das Detektiermittel, das eine Stimme des Betreibers liest als die zweite biometrische Information während des Betriebs des Geräts; ein Stimmabdruckdaten-Speichermittel (v5) als das Datenspeichermittel, das Stimmabdruckdaten aufzeichnet; und ein Stimmabdruck-Überprüfungsmittel (v3) als das zweite Überprüfungsmittel, das den Betreiber identifiziert durch Überprüfen von Stimmabdruckdaten, die erhalten werden durch das Mikrofon (v1) gegen Stimmabdruckdaten, die gespeichert werden in dem Stimmabdruckdaten-Speichermittel.

4. Ein Gerätbetriebserlaubnis- und Authentifizierungssystem nach Anspruch 1, **dadurch gekennzeichnet, dass**, nachdem dem Betriebsweiterführungs-Authentifizierungsmittel (i1, i3, h1) erlaubt wird, den Betrieb des Geräts zu starten, das Betriebsweiterführungs-Authentifizierungsmittel (i1, i3, h1) wiederholt die Weiterführung des Betriebs authentifiziert auf Grundlage zweiter Überprüfungsbetriebe, die die zweite biometrische Information verwenden, die gelesen wird bei vorbestimmten Zeitenintervallen.

5. Ein Gerätbetriebserlaubnis- und Authentifizierungssystem nach Anspruch 1, **dadurch gekennzeichnet, dass** das Betriebsweiterführungs-Authentifizierungsmittel (i1, i3, h1) die zweite biometrische Information zu allen Zeiten liest, und falls ein Ergebnis zweiter Überprüfungsbetriebe unter Verwendung der gelesenen zweiten biometrischen Information negativ ist, einen weiteren Betrieb unterbindet und wiederholt die Weiterführung des Betriebs authentifiziert auf Grundlage zweiter Überprüfungsbetriebe, die die gelesene zweite biometrische Information verwenden.

## Revendications

1. Système d'autorisation et d'authentification d'exploitation de dispositif comprenant :
un moyen d'authentification de démarrage d'exploitation (f1, f3, h1) comprenant :
un capteur d'empreintes digitales (f1) qui lit, préalablement à l'exploitation du dispositif, une image d'empreintes digitales de l'opérateur ;
un moyen de stockage de données d'empreintes digitales (f5) qui enregistre des données d'empreintes digitales ;
un moyen de vérification d'empreintes digitales (f3) qui identifie l'opérateur en vérifiant des données d'empreintes digitales obtenues par ledit capteur d'empreintes digitales (f1) par rapport à des données d'empreintes digitales stockées dans ledit moyen de stockage de données d'empreintes digitales (f5) ; et
un premier moyen d'autorisation et d'authentification (h1) qui autorise et authentifie le démarrage de l'exploitation du dispositif sur la base d'un résultat de la première opération de vérification par ledit moyen de vérification d'empreintes digitales (f3) ;
le système d'autorisation et d'authentification d'exploitation de dispositif comprenant en outre un moyen d'authentification de poursuite d'exploitation (i1, i3, h1) comprenant :
un moyen de détection (i1, v1) qui lit d'une manière sans contact une seconde information biométrique de l'opérateur pendant l'exploitation du dispositif qui est différente des données d'empreintes digitales ;
un moyen de stockage de données (i7, v7) qui stocke temporairement une version de la seconde information biométrique obtenue par une première lecture par ledit moyen de détection (i1, v1) qui a lieu après autorisation et authentification du démarrage de l'exploitation par le moyen d'authentification de démarrage d'exploitation ;
un second moyen de vérification (i3, v3) qui identifie l'opérateur en vérifiant une seconde information biométrique obtenue par une seconde lecture par ledit moyen de détection par rapport à la version de la seconde information biométrique temporairement stockée dans ledit moyen de stockage de données (i7, v7) ; et
un second moyen d'autorisation et d'authentification (h1) qui autorise et authentifie la poursuite de l'exploitation du dispositif sur la base d'un résultat de l'opération de vérification par ledit second moyen de vérification (i3, v3).

2. Système d'autorisation et d'authentification d'exploitation de dispositif selon la revendication 1, **caractérisé en ce que** ledit moyen d'authentification de poursuite d'exploitation (i1, i3, h1) comprend : une caméra (i1) en tant que dit moyen de détection qui lit une image du visage de l'opérateur en tant que dite seconde information biométrique pendant l'exploitation du dispositif ; un moyen de stockage de données de trait du visage (i5) en tant que dit moyen de stockage de données qui enregistre des données de trait du visage ; et un moyen de vérification de trait du visage (i3) en tant que dit second moyen de vérification qui identifie l'opérateur en vérifiant des données de trait du visage obtenues par ladite caméra (i1) par rapport aux données de trait du visage stockées dans ledit dispositif de stockage de données de trait du visage (i5).

3. Système d'autorisation et d'authentification d'exploitation de dispositif selon la revendication 1, **caractérisé en ce que** ledit moyen d'authentification de poursuite d'exploitation comprend : un microphone (v1) en tant que dit moyen de détection qui lit la voix de l'opérateur en tant que dite seconde information biométrique pendant l'exploitation du dispositif ; un moyen de stockage de données d'empreinte vocale (v5) en tant que dit moyen de stockage de données qui enregistre des données d'empreinte vocale ; et un moyen de vérification d'empreinte vocale (v3) en tant que dit second moyen de vérification qui identifie l'opérateur en vérifiant des données d'empreinte vocale obtenues par ledit microphone (v1) par rapport aux données d'empreinte vocale stockées dans ledit moyen de stockage de données d'empreinte vocale.

4. Système d'autorisation et d'authentification d'exploitation de dispositif selon la revendication 1, **caractérisé en ce que**, après que ledit moyen d'authentification de poursuite d'exploitation (i1, i3, h1) est autorisé à démarrer l'exploitation du dispositif, ledit moyen d'authentification de poursuite d'exploitation (i1, i3, h1) authentifie de manière répétée la poursuite de l'exploitation sur la base des secondes opérations de vérification qui utilisent la seconde information biométrique lue à des intervalles de temps prédéterminés.

5. Système d'autorisation et d'authentification d'exploitation de dispositif selon la revendication 1, **caractérisé en ce que** ledit moyen d'authentification de poursuite d'exploitation (i1, i3, h1) lit la seconde information biométrique à tout moment et, si un résultat des secondes opérations de vérification utilisant la seconde information biométrique lue est négatif, désactive une exploitation additionnelle et authentifie de manière répétée la poursuite de l'exploitation sur la base de secondes opérations de vérification qui utilisent la seconde information biométrique lue.
